# FASCICULE DE BREVET EUROPEEN

(11) **EP 2 169 441 B1**
(45) Date de publication et mention de la délivrance du brevet: **20.11.2019**
(21) Numéro de dépôt: 09170940.2
(22) Date de dépôt: 22.09.2009
(51) Int. Cl.: G02B 17/06, G02B 23/06

(54) **Télescope de type Korsch à miroirs de renvoi**
Korschteleskop mit Umlenkspiegeln
Korsch-type telescope with folding mirrors

(30) Priorité: 25.09.2008 FR 0856467
(43) Date de publication de la demande: 31.03.2010
(73) Titulaire: Airbus Defence and Space SAS, 31402 Toulouse Cedex 4 (FR)
(72) Inventeur: Brouard, Laurent, 31500 Toulouse (FR); Corselle, Bertrand, 31570 Sainte Foy d'Aigrefeuille (FR); Safa, Frédéric, 31400 Toulouse (FR)
(74) Mandataire: Plasseraud IP

(56) Documents cités:
- FR-A- 2 798 477
- US-A- 4 101 195
- US-A- 5 239 404
- US-A- 5 631 770
- REFREGIER A ET AL: "DUNE: The Dark Universe Explorer", ARXIV.ORG, CORNELL UNIVERSITY LIBRARY, 201 OLIN LIBRARY CORNELL UNIVERSITY ITHACA, NY 14853, 3 October 2006 (2006-10-03), XP080254796, DOI: 10.1117/12.672261
- JOHNSON R B ED - DRIGGERS RONALD G: "WIDE FIELD OF VIEW THREE-MIRROR TELESCOPES HAVING A COMMON OPTICAL AXIS", OPTICAL ENGINEERING, SOC. OF PHOTO-OPTICAL INSTRUMENTATION ENGINEERS, BELLINGHAM, vol. 27, no. 12, 1 December 1988 (1988-12-01), pages 1046-1050, XP000035029, ISSN: 0091-3286

## Description

La présente invention concerne un télescope de type Korsch à miroirs de renvoi.

Un télescope de Korsch est un type particulier de télescope anastigmatique à trois miroirs ayant chacun une puissance optique non nulle.

De façon connue, un télescope de Korsch comprend les éléments suivants, énumérés dans l'ordre en suivant un sens de propagation de rayons formant une image finale d'une portion de scène qui est située dans une direction de visée du télescope :
- un miroir primaire, qui possède une ouverture centrale,
- un miroir secondaire, qui est disposé en avant du miroir primaire,
- un miroir tertiaire, qui est disposé en arrière du miroir primaire pour recevoir, à travers l'ouverture du miroir primaire, des rayons réfléchis par le miroir primaire puis par le miroir secondaire, et
- un détecteur d'image, qui est disposé dans un plan de formation de l'image finale par les miroirs primaire, secondaire et tertiaire.

Ces trois miroirs ont, de façon connue, chacun une puissance optique non nulle pour former ensemble l'image finale.

De plus, les miroirs primaire et secondaire sont agencés en outre pour former, entre le miroir secondaire et le miroir tertiaire, une image intermédiaire de la portion de scène.

Un tel télescope possède une configuration hors d'axe, selon laquelle le miroir tertiaire est décalé latéralement par rapport à l'axe optique du miroir primaire. De cette façon, le détecteur est situé en dehors du faisceau de rayons qui se propage du miroir secondaire vers le miroir tertiaire. La direction de visée du télescope est alors décalée angulairement par rapport à l'axe optique du miroir primaire, par exemple d'un angle d'environ 0,5° (degré).

La figure 3 du document US 4,101,195 montre le champ de visée annulaire d'un tel télescope de Korsch, sur lequel le faisceau lumineux formant image n'intercepte pas le miroir de renvoi nécessaire à l'implantation du détecteur. De ce fait, ce miroir de renvoi ne masque pas une partie de ce faisceau lumineux, si bien que le télescope de Korsch possède une luminosité et une pupille d'entrée qui sont identiques à celles d'un télescope de Ritchey-Chrétien dont il est dérivé. Mais, comme le montre la figure 4 du document US 4,101,195, le télescope de Korsch reste efficace sur un champ d'entrée qui est beaucoup plus large que le télescope de Ritchey-Chrétien.

Par ailleurs, le document US 5,631,770 décrit un télescope à quatre miroirs de renvoi de faisceau, dont l'un est utilisé en outre pour réfléchir deux fois le faisceau lumineux, juste avant et juste après sa réflexion par le miroir tertiaire du télescope. Le faisceau lumineux subit donc cinq réflexions de renvoi, en plus des réflexions sur les miroirs primaire, secondaire et tertiaire, ce qui provoque une perte importante de luminosité pour les images formées.

En outre, le télescope du document US 5,631,770 est utilisé selon l'axe optique de son miroir primaire. Pour cette raison, il n'est pas du type Korsch et n'en présente pas les avantages qui ont été rappelés ci-dessus. En particulier, la figure 6 de US 5,631,770 montre que la pupille du télescope est occultée partiellement pour permettre le passage du faisceau lumineux entre sa seconde réflexion sur le deuxième miroir de renvoi et sa réflexion ultérieure sur le troisième miroir de renvoi. Une telle occultation réduit la luminosité des images formées.

Enfin, le plan focal du télescope de US 5,631,770 est situé très à l'extérieur du bord périphérique externe du miroir primaire. Une structure de support supplémentaire est donc nécessaire, en plus de celle qui porte le miroir primaire, pour porter le détecteur d'image.

Les publications *"*DUNE: The Dark Universe Explorer" par A. Réfrégier et al et " Wide field of view three-mirror telescopes having a common optical axis" par R. Barry Johnson présentent des télescopes optiques de type Korsch particulièrement intéressants.

Un but de la présente invention consiste alors à adapter un télescope de type Korsch pour une utilisation à bord d'un satellite d'observation planétaire, par exemple un satellite d'observation terrestre. Pour cela, l'invention propose un télescope de type Korsch qui est compact aussi bien dans la direction de l'axe optique du miroir primaire que dans des directions qui sont perpendiculaires à cet axe. Outre un encombrement réduit qui est provoqué par un télescope selon l'invention, une telle compacité est avantageuse lorsque le satellite est destiné à effectuer des changements rapides d'attitude. En effet, un télescope selon l'invention génère des augmentations des moments d'inertie du satellite qui sont limitées. Mais il est entendu qu'un télescope selon l'invention n'est pas limité à l'application d'observation planétaire ou terrestre à partir d'un satellite, et qu'il peut être utilisé avantageusement pour de nombreuses autres applications.

Un autre but de la présente invention consiste à réduire le nombre total de réflexions du faisceau lumineux qui produit l'image à travers le télescope, afin d'obtenir cette image avec une luminosité supérieure.

Un autre but encore de l'invention consiste à proposer un télescope qui présente une distance importante entre le miroir tertiaire et le plan de formation de l'image finale, pour réduire une distorsion optique de cette image.

Un télescope selon l'invention, qui est du type Korsch tel que rappelé plus haut, comprend en outre des premier, deuxième et troisième miroirs de renvoi qui sont situés en arrière du miroir primaire. Chacun de ces trois miroirs de renvoi est plan.

Le premier miroir de renvoi est situé sur un chemin des rayons entre les miroirs secondaire et tertiaire. De plus, il est orienté de sorte que les rayons forment, juste après réflexion sur ce premier miroir de renvoi, un faisceau qui a une première direction de propagation faisant un angle inférieur à 20° avec une direction radiale du miroir primaire. Autrement dit, le premier miroir de renvoi replie le faisceau des rayons qui forme l'image saisie par le détecteur, sensiblement parallèlement à un plan moyen du miroir primaire, après que ce faisceau a été réfléchi par le miroir secondaire et après qu'il a traversé l'ouverture du miroir primaire.

Dans le cadre de la présente invention, on entend par direction de propagation d'un faisceau de rayons la direction de propagation moyenne de ses rayons. Le faisceau peut avoir une ouverture angulaire, notamment lorsqu'il s'agit d'un faisceau convergent ou divergent. Sa direction de propagation est alors la direction de l'axe longitudinal central du faisceau.

Les deuxième et troisième miroirs de renvoi sont situés, le long des rayons, entre le miroir tertiaire et le détecteur. De plus, ils ont des axes optiques respectifs qui forment chacun un angle inférieur à 20° avec le plan moyen du miroir primaire. Autrement dit, les deuxième et troisième miroirs de renvoi replient successivement le faisceau des rayons qui forment l'image saisie, dans un plan qui est sensiblement parallèle au plan moyen du miroir primaire.

Grâce aux trois miroirs de renvoi, le télescope s'étend sur une faible longueur parallèlement à l'axe optique du miroir primaire, derrière ce miroir. Ses dimensions perpendiculairement à l'axe optique du miroir primaire sont aussi réduites, grâce à l'agencement des miroirs de renvoi selon l'invention. Par conséquent, le télescope de l'invention est particulièrement compact, et adapté pour être utilisé dans un volume de logement qui est restreint.

De plus, un télescope selon l'invention ne possède que trois miroirs de renvoi, en plus des miroirs primaire, secondaire et tertiaire. Cette limitation du nombre de miroirs de renvoi, et du nombre de réflexions qui sont subies par la lumière qui forme l'image détectée, contribue à ce que ces images aient une luminosité élevée. La masse de l'ensemble du télescope est aussi réduite par cette limitation du nombre des miroirs de renvoi.

En outre, le détecteur d'un télescope selon l'invention peut être situé à proximité du bord périphérique du miroir primaire. De cette façon, le télescope peut présenter des dimensions transversales qui sont peu supérieures à celles du miroir primaire.

Un autre avantage de l'invention résulte de la disposition des deuxième et troisième miroirs de renvoi entre le miroir tertiaire et le détecteur. Grâce aux renvois qui sont réalisés par ces deux miroirs, le trajet des rayons qui forment l'image finale sur le détecteur peut être suffisamment long après le miroir tertiaire pour que l'image finale présente un faible niveau de distorsions. En particulier, un seul miroir de renvoi est situé entre les miroirs secondaire et tertiaire du télescope. De cette façon, le miroir tertiaire peut être rapproché du miroir secondaire, pour augmenter encore la distance entre le miroir tertiaire et le plan de formation de l'image finale qui est détectée.

En outre, le miroir primaire, les deuxième et troisième miroirs de renvoi et le miroir tertiaire d'un télescope selon l'invention peuvent être portés par une même structure de support commune. Eventuellement, cette structure de support commune peut aussi porter le détecteur d'image.

Par ailleurs, un télescope selon l'invention peut être facilement utilisé à bord d'un satellite planétaire ou terrestre. En effet, le détecteur d'image possède une surface de détection qui est sensiblement perpendiculaire au plan moyen du miroir primaire. Le télescope peut alors être positionné sur le satellite de telle sorte que le plan focal du télescope, dans lequel se trouve la surface de détection du détecteur d'image, soit perpendiculaire à la vitesse de défilement du satellite et du côté qui est opposé principalement au soleil. Lorsque le détecteur est en outre situé à proximité du bord périphérique du miroir primaire, ou à l'extérieur de ce bord, le contrôle de la température du détecteur d'image est alors simplifié.

Selon une disposition particulièrement avantageuse, les deuxième et troisième miroirs de renvoi peuvent être orientés de sorte que les rayons arrivent sur le détecteur avec une seconde direction de propagation qui forme, en projection dans le plan moyen du miroir primaire, un angle compris entre 45° et 135° avec une projection de la première direction de propagation dans ce même plan moyen. Autrement dit, les rayons peuvent arriver sur le détecteur sensiblement perpendiculairement à la direction selon laquelle ils arrivent sur le miroir tertiaire. Le miroir tertiaire et le détecteur peuvent ainsi être agencés facilement derrière le miroir primaire, avec des supports respectifs ou des parties respectives de support qui peuvent être séparés.

Selon une caractéristique avantageuse d'un télescope selon l'invention, le miroir tertiaire peut avoir un axe optique qui est incliné d'un angle inférieur à 20° par rapport au plan moyen du miroir primaire, comme les deuxième et troisième miroirs de renvoi. En particulier, les axes optiques de ces trois miroirs peuvent être sensiblement parallèles au plan moyen du miroir primaire. La longueur du télescope en arrière du miroir primaire est alors encore plus courte.

Selon une autre caractéristique avantageuse, le premier miroir de renvoi peut être situé, le long des rayons, au niveau de l'image intermédiaire. De cette façon, l'ensemble de la structure du télescope peut être encore plus compacte, et être assemblée en n'accédant qu'à l'arrière du miroir primaire.

Un télescope selon l'invention peut être à une seule voie d'imagerie, tel que décrit jusqu'à présent. Dans ce cas, le premier miroir de renvoi est décalé latéralement par rapport à l'axe optique du miroir primaire, soit vers un même côté de cet axe que le miroir tertiaire, soit du côté opposé à ce dernier. Lorsqu'il est décalé du côté opposé au miroir tertiaire par rapport à l'axe optique du miroir primaire, la dimension transversale du télescope est réduite par rapport à l'autre sens du décalage.

Alternativement, un télescope selon l'invention peut comporter plusieurs voies d'imagerie, c'est-à-dire deux voies ou plus. Dans ce cas, deux au moins parmi ces voies d'imagerie peuvent chacune être conformes aux caractéristiques qui ont été décrites précédemment. Une première des voies d'imagerie du télescope comprend donc, dans l'ordre en suivant le sens de propagation des rayons, les miroirs primaire et secondaire, le premier miroir de renvoi, le miroir tertiaire, les deuxième et troisième miroirs de renvoi et le détecteur d'image. Simultanément, une seconde des voies d'imagerie du télescope comprend les miroirs primaire et secondaire, un autre premier miroir de renvoi, un autre miroir tertiaire, des autres deuxième et troisième miroirs de renvoi et un autre détecteur. Par conséquent, les deux miroirs primaire et secondaire sont communs aux deux voies d'imagerie.

Pour la première voie d'imagerie, le décalage latéral du premier miroir de renvoi par rapport à l'axe optique du miroir primaire est du même côté de cet axe que le miroir tertiaire correspondant. De même pour la seconde voie d'imagerie : le décalage latéral de l'autre premier miroir de renvoi et l'autre miroir tertiaire sont aussi d'un même côté de l'axe optique du miroir primaire, différent du côté de la première voie d'imagerie.

Pour un tel télescope à au moins deux voies d'imagerie, le détecteur de la première voie d'imagerie et l'autre détecteur de la seconde voie d'imagerie peuvent être situés d'un même côté d'un premier plan méridien du miroir primaire. De cette façon, un satellite d'observation planétaire ou terrestre, qui est équipé du télescope, peut être orienté de sorte que les deux détecteurs soient simultanément du côté opposé au soleil.

Les composants optiques qui ne sont pas communs aux deux voies d'imagerie, c'est-à-dire le premier miroir de renvoi, le miroir tertiaire, les deuxième et troisième miroirs de renvoi et le détecteur pour la première voie d'imagerie d'une part, et l'autre premier miroir de renvoi, l'autre miroir tertiaire, les autres deuxième et troisième miroirs de renvoi et l'autre détecteur pour la seconde voie d'imagerie d'autre part, peuvent être situés respectivement sur des côtés opposés d'un second plan méridien du miroir primaire, perpendiculaire au premier plan méridien. De cette façon, les deux voies d'imagerie sont séparées spatialement, après que les rayons ont traversé l'ouverture centrale du miroir primaire. L'assemblage des composants des deux voies d'imagerie est simplifié à l'arrière du miroir primaire.

De plus, les deux voies d'imagerie peuvent avoir des configurations symétriques. Autrement dit, le premier miroir de renvoi, le miroir tertiaire, les deuxième et troisième miroirs de renvoi et le détecteur pour la première voie d'imagerie d'une part, et l'autre premier miroir de renvoi, l'autre miroir tertiaire, les autres deuxième et troisième miroirs de renvoi et l'autre détecteur pour la seconde voie d'imagerie d'autre part, peuvent être situés à des positions qui sont symétriques deux à deux par rapport au second plan méridien du miroir primaire. La conception de l'ensemble du télescope à voies multiples est alors simplifiée.

D'autres particularités et avantages de la présente invention apparaîtront dans la description ci-après de deux exemples de réalisation non limitatifs, en référence aux dessins annexés, dans lesquels :
- les figures 1a, 1b et 1c sont des vues d'un télescope à une seule voie d'imagerie selon l'invention, respectivement en perspective, de côté et en plan ; et
- les figures 2a, 2b et 2c correspondent respectivement aux figures 1a, 1b et 1c pour un télescope à deux voies d'imagerie selon l'invention.

Pour raison de clarté de ces figures, les composants du télescope, notamment les supports des miroirs, qui ne sont pas nécessaires à la compréhension de l'invention ne sont pas représentés. De plus, des références identiques sur des figures différentes désignent des éléments identiques. Enfin, sur chaque figure, plusieurs rayons ont été représentés, qui proviennent de plusieurs points d'une portion de scène située dans la direction de visée du télescope. Ces rayons illustrent le fonctionnement optique de l'invention, d'une façon qui est usuelle pour l'Homme du métier.

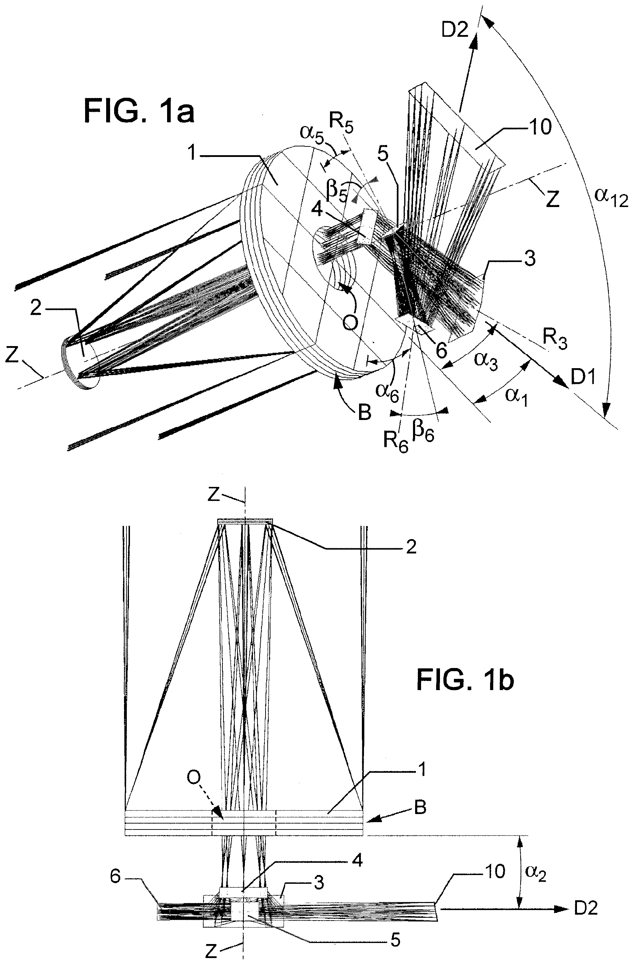

En référence aux figures 1a à 1c qui concernent un télescope selon l'invention à une seule voie d'imagerie, les références suivantes désignent les éléments optiques énoncés ci-après :
1, 2, 3 : miroirs primaire, secondaire et tertiaire, respectivement ;
4, 5, 6 : premier, deuxième et troisième miroirs de renvoi, respectivement ;
10 : surface de détection d'un détecteur d'image.

En outre, R₃, R₅ et R₆ désignent les axes optiques respectifs du miroir tertiaire 3 et des premier et deuxième miroirs de renvoi 5 et 6. Chacun de ces axes est donc perpendiculaire au miroir correspondant. L'axe optique R₃ passe par le centre optique du miroir tertiaire 3.

Le miroir 1 possède une ouverture centrale référencée O et un bord périphérique B. Les miroirs 1, 2 et 3 forment ensemble un télescope de type Korsch. Ils ont des puissances optiques respectives, que l'Homme du métier sait sélectionner en fonction de la distance focale désirée pour le télescope. Les autres caractéristiques du télescope, notamment son ouverture et les dimensions de sa pupille d'entrée, ne sont pas directement reliées à l'invention et ne sont donc pas mentionnées dans la présente description. Les rayons qui proviennent de points de la portion de scène qui est visée sont réfléchis d'abord par le miroir 1, puis par le miroir 2, traversent ensuite le miroir 1 par son ouverture centrale O, puis sont réfléchis par le miroir 3. La surface de détection 10 du détecteur est placée dans le plan focal du télescope, en aval du miroir 3, pour saisir l'image finale qui formée de la portion de scène.

A titre d'exemple non limitatif, le télescope peut fonctionner avec la lumière visible pour former et saisir les images. Mais le principe de l'invention peut être appliqué de façon identique à d'autres bandes de longueurs d'onde.

Z-Z désigne l'axe optique du miroir 1. En général, le télescope est dans une configuration hors d'axe. En outre, une image intermédiaire de la portion de scène est formée par les deux miroirs 1 et 2, sur le trajet des rayons entre les miroirs 2 et 3. Cette image intermédiaire est située en arrière du miroir 1.

Selon l'invention, les trois miroirs 4 à 6, appelés miroirs de renvoi, sont ajoutés au télescope pour replier les rayons qui sont issus de la portion de scène visée et qui forment l'image finale qui est saisie par le détecteur. Ils sont tous les trois plans, et situés à l'arrière du miroir 1, c'est-à-dire d'un côté de celui-ci qui est opposé à la scène visée et au miroir 2.

Le miroir 4 est situé au niveau de l'image intermédiaire. Il est incliné par rapport à l'axe Z-Z de sorte que les rayons qui proviennent du miroir 2 sont réfléchis par le miroir 4, avec une direction de propagation après réflexion qui est peu inclinée par rapport à un plan moyen du miroir 1. Cette direction, dite première direction de propagation des rayons, est notée D1. Dans le cadre de la présente invention, on désigne par plan moyen du miroir 1 un plan qui est tangent au miroir 1 au centre de celui-ci. On entend aussi par direction qui est peu inclinée par rapport à ce plan moyen, ou sensiblement parallèle à celui-ci, une direction qui fait un angle inférieur à 20° avec ce plan. Etant donné que les rayons traversent l'ouverture centrale O du miroir 1 avant d'atteindre le miroir 4, leur direction de propagation D1 juste après la réflexion sur le miroir 4 fait un angle α₁ qui est inférieur à 20° avec une direction radiale du miroir 1.

Par exemple, le miroir 4 peut être incliné à 45° par rapport à l'axe optique Z-Z.

Du fait du repliement de faisceau que produit le miroir 4, le miroir 3 est placé dans la direction D1 à partir du miroir 4. Le miroir 3 se situe alors à proximité du bord périphérique B du miroir 1. Son axe optique R₃ est avantageusement sensiblement parallèle au plan moyen du miroir 1. Autrement dit, l'angle α₃ entre l'axe optique R₃ et le plan moyen du miroir 1 est avantageusement inférieur à 20°.

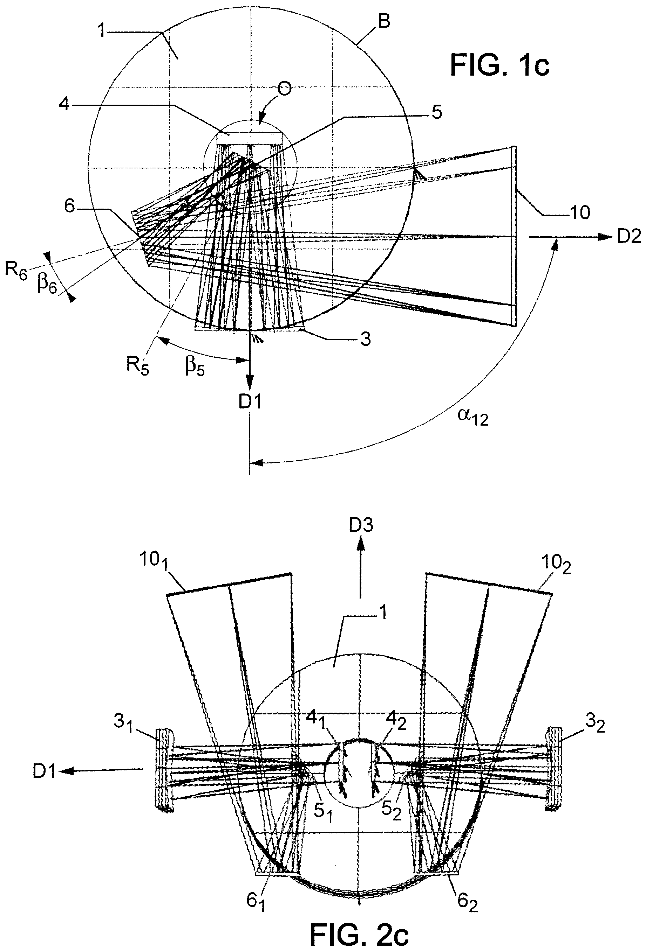

Les miroirs 5 et 6 sont placés derrière le miroir 1, de façon à orienter finalement le faisceau des rayons issus de la portion de scène sensiblement perpendiculairement à la direction D1. La direction du faisceau lors de son impact sur la surface de détection 10 du détecteur d'image est notée D2. Les directions D1 et D2 sont donc sensiblement perpendiculaires entre elles, avec un angle α₁₂ qui peut être compris entre 45° et 135° en fonction des orientations précises des miroirs 5 et 6 (voir figure 1c). La direction D2 est en outre sensiblement parallèle au plan moyen du miroir 1, avec un angle α₂ inférieur à 20° par rapport à ce plan moyen (voir figure 1b).

Pour cela, les miroirs 5 et 6 sont disposés sur le trajet du faisceau de rayons, avec des axes optiques respectifs qui sont sensiblement parallèles au plan moyen du miroir 1.

Selon une disposition avantageuse, le miroir 5 peut être orienté de sorte que les rayons arrivent sur le miroir 5 avec un angle d'incidence moyen β₅ qui est compris entre 10° et 50° (voir figures 1a et 1c). Dans le cadre de la présente description, on entend par angle d'incidence moyen, l'angle entre la direction de propagation du faisceau de rayons incidents sur l'un des miroirs plans, et l'axe optique de ce miroir. Par exemple, le miroir 5 est orienté pour que le faisceau ait un angle d'incidence moyen β₅ d'environ 30° sur celui-ci.

De même, le miroir 6 peut être orienté de sorte que les rayons arrivent sur le miroir 6 avec un angle d'incidence moyen β₆ qui est inférieur à 45°. Par exemple, le miroir 6 peut être orienté pour que les rayons aient un angle d'incidence moyen β₆ d'environ 15° sur celui-ci.

La surface de détection 10 du détecteur est orientée perpendiculairement à la direction D2, et est située à proximité du bord B du miroir 1.

Etant donné que les miroirs 3, 5 et 6 sont situés à proximité de la face postérieure du miroir primaire 1, tout en restant à l'intérieur de ou proche du bord périphérique externe B du miroir primaire 1, les miroirs 3, 5 et 6, et aussi le détecteur d'image, peuvent être portés ensemble par la structure de support du miroir primaire 1. Les positions relatives des miroirs 3, 5 et 6, et du détecteur, par rapport au miroir primaire 1, sont alors particulièrement stables. Cette même structure peut aussi porter le miroir de renvoi 4.

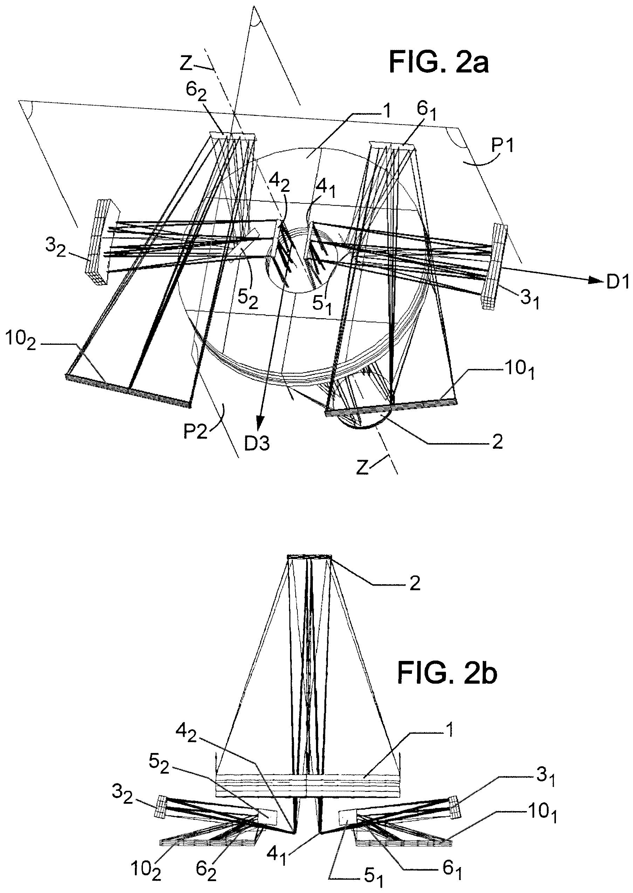

Un télescope à plusieurs voies d'imagerie, dont deux au moins sont conformes à l'invention, est maintenant décrit en référence aux figures 2a à 2c. Dans le cadre de la présente description, chaque voie d'imagerie peut être panchromatique et/ou multi-monochromatique, et deux voies distinctes peuvent avoir des directions de visée qui sont décalées d'un angle déterminé afin d'obtenir un enregistrement stéréo de la portion de scène. Alternativement, chaque voie peut être monochromatique et dédiée à une longueur d'onde différente de celles de la ou des autre(s) voie(s).

Les composants optiques propres à chacune des deux voies d'imagerie considérées, appelées première et seconde voies d'imagerie, sont respectivement indexés par 1 ou 2. Ils sont désignés chacun par la même référence principale que le composant correspondant du mode de réalisation des figures 1a à 1c. En outre, les miroirs primaire et secondaire, qui sont communs aux deux voies, sont encore référencés respectivement 1 et 2.

Ainsi, la première voie d'imagerie comprend les composants suivants, dans l'ordre en suivant le sens de propagation des rayons : les miroirs 1 et 2, un premier miroir plan de renvoi 4₁, un miroir tertiaire 3₁, un deuxième miroir plan de renvoi 5₁, un troisième miroir plan de renvoi 6₁ et une surface de détection d'image 10₁.

La seconde voie d'imagerie comprend de même : les miroirs 1 et 2, un autre premier miroir plan de renvoi 4₂, un autre miroir tertiaire 3₂, un autre deuxième miroir plan de renvoi 5₂, un autre troisième miroir plan de renvoi 6₂ et une autre surface de détection d'image 10₂.

Chaque voie possède séparément une configuration et un fonctionnement optique qui sont analogues à ceux qui ont déjà été décrits en référence aux figures 1a à 1c. L'Homme du métier, au regard des figures 2a à 2c, comprendra la configuration et le fonctionnement d'un télescope à au moins deux voies selon l'invention.

En particulier, la figure 2a montre que les surfaces respectives 10₁ et 10₂ des deux détecteurs d'images sont situées d'un même côté d'un premier plan méridien P1 du miroir 1. Ainsi, lorsque le télescope est utilisé à bord d'un satellite, les deux détecteurs peuvent être placés simultanément du côté opposé au soleil par rapport à l'axe optique Z-Z.

Les composants des deux voies peuvent aussi être situés et orientés sensiblement symétriquement par rapport à un second plan méridien P2 du miroir 1, perpendiculaire au plan P1. Plus précisément, les composants qui appartiennent respectivement aux deux voies d'imagerie et qui ont des fonctions identiques au sein de chaque voie peuvent être disposés symétriquement par rapport au plan P2.

En outre, dans la configuration particulière du télescope qui est représentée sur les figures 2a à 2c, le miroir 4₁ de la première voie d'imagerie et le miroir 4₂ de la seconde voie d'imagerie sont chacun décalés latéralement par rapport à l'axe optique Z-Z du miroir 1 dans deux sens opposés. Une telle disposition n'est pas indispensable, mais peut simplifier la conception et l'agencement global du télescope.

De façon générale, la surface de détection d'un détecteur d'image qui est utilisé pour mettre en œuvre l'invention peut avoir une forme quelconque. Elle peut être carrée ou rectangulaire notamment. Lorsqu'elle est allongée, par exemple rectangulaire, avec une dimension de côtés plus grande que l'autre, la portion d'image intermédiaire qui est conjuguée avec la portion de scène imagée sur la surface de détection est aussi allongée. En fonction de l'orientation de la surface de détection, cette portion d'image intermédiaire peut être allongée selon une direction longitudinale qui est parallèle au plan moyen du miroir primaire. Avantageusement, le premier miroir de renvoi peut alors être orienté de sorte que la première direction de propagation D1 du faisceau de rayons, juste après sa réflexion sur ce premier miroir de renvoi, soit perpendiculaire à la direction longitudinale de la portion d'image intermédiaire. De cette façon, la longueur du télescope en arrière du miroir 1 peut être encore plus courte. Sur les figures 1a et 1c, la direction longitudinale de la portion d'image intermédiaire est confondue avec la direction D2. Elle est notée D3 sur les figures 2a et 2c.

Un télescope selon l'invention est adapté pour tout mode de prise de vues successives. En particulier, il peut être tourné entre deux prises de vues successives, selon le mode d'enchaînement des prises de vues qui est couramment appelé «step & stare». Lorsqu'il est utilisé à bord d'un satellite planétaire ou terrestre, il peut être tourné entre deux prises de vues successives de façon à réaliser un balayage transversal d'une bande de la surface de la planète qui est survolée. Un tel mode d'observation est connu sous la désignation «push-broom».

Enfin, il est entendu que l'invention peut être reproduite en introduisant des modifications par rapport aux deux modes de réalisation qui ont été décrits en détail. De telles modifications peuvent dépendre de l'application particulière qui est envisagée pour le télescope. Notamment, les dimensions du ou des détecteur(s) d'image(s) utilisé(s) peuvent être changées, de même que le nombre de voies d'imagerie qui sont disposées en parallèle. Parmi ces modifications, on peut citer les suivantes, sans limitation :
- les première et seconde directions de propagation des faisceaux de rayons à l'intérieur du télescope, désignées par D1 et D2, ne sont pas nécessairement exactement perpendiculaires entre elles ;
- les directions de propagation D1 et D2 ne sont pas nécessairement exactement parallèles au plan moyen du miroir primaire ;
- les axes optiques respectifs des deuxième et troisième miroirs de renvoi et du miroir tertiaire ne sont pas nécessairement exactement parallèles au plan moyen du miroir primaire ;
- pour un télescope à deux voies d'imagerie chacune conformes à l'invention, les premières directions de propagation, correspondant à D1 et relatives à chaque voie d'imagerie, ne sont pas nécessairement parallèles en elles. Il en est de même des secondes directions de propagation respectives des deux voies, correspondant à D2. Elles peuvent présenter entre elles un angle aigu, alors que les deux détecteurs restent d'un même côté d'un plan méridien du miroir primaire ; et
- deux voies d'imagerie conformes à l'invention d'un même télescope peuvent correspondre à des directions de visée respectives qui sont décalées angulairement de façon variable. Toutefois, lorsque les deux voies d'imagerie correspondent à des intervalles spectraux de détection qui sont différents, leurs directions de visée respectives peuvent être identiques.

## Revendications

1. Télescope de type Korsch comprenant les éléments suivants, énumérés dans l'ordre en suivant un sens de propagation de rayons formant une image finale d'une portion de scène située autour d'une direction de visée du télescope :
- un miroir primaire (1) ayant une ouverture centrale (O),
- un miroir secondaire (2) disposé en avant du miroir primaire,
- un miroir tertiaire (3), disposé en arrière du miroir primaire pour recevoir, à travers l'ouverture du miroir primaire, des rayons réfléchis par ledit miroir primaire puis par le miroir secondaire, et
- un détecteur d'image (10), disposé dans un plan de formation de l'image finale par les miroirs primaire, secondaire et tertiaire,
les miroirs primaire et secondaire étant agencés en outre pour former, entre ledit miroir secondaire et ledit miroir tertiaire, une image intermédiaire de la portion de scène,
le télescope étant **caractérisé en ce qu'**il comprend, en outre, des premier, deuxième et troisième miroirs de renvoi plans situés en arrière du miroir primaire,
- ledit premier miroir de renvoi (4) étant situé sur un chemin des rayons entre les miroirs secondaire et tertiaire, et orienté de sorte que les rayons forment, juste après réflexion sur ledit premier miroir de renvoi, un faisceau ayant une première direction de propagation (D1) faisant un angle (α₁) inférieur à 20° avec une direction radiale du miroir primaire, et
- lesdits deuxième (5) et troisième (6) miroirs de renvoi étant situés, le long des rayons, entre le miroir tertiaire et le détecteur, et ayant des axes optiques respectifs (R₅, R₆) formant chacun un angle (α₅, α₆) inférieur à 20° avec un plan moyen du miroir primaire.

2. Télescope selon la revendication 1, dans lequel les deuxième (5) et troisième (6) miroirs de renvoi sont orientés de sorte que les rayons arrivent sur le détecteur (10) avec une seconde direction de propagation (D2) qui forme, en projection dans le plan moyen du miroir primaire, un angle (α₁₂) compris entre 45° et 135° avec une projection de ladite première direction de propagation (D1) dans ledit plan moyen.

3. Télescope selon la revendication 1 ou 2, dans lequel le deuxième miroir de renvoi (5) est orienté de sorte que les rayons arrivent sur ledit deuxième miroir de renvoi avec un angle d'incidence moyen (β₅) compris entre 10 et 50°.

4. Télescope selon l'une quelconque des revendications précédentes, dans lequel le troisième miroir de renvoi (6) est orienté de sorte que les rayons arrivent sur ledit troisième miroir de renvoi avec un angle d'incidence moyen (β₆) inférieur à 45°.

5. Télescope selon l'une quelconque des revendications précédentes, dans lequel le miroir tertiaire (3) a un axe optique (R₃) qui est incliné d'un angle (α₃) inférieur à 20° par rapport au plan moyen du miroir primaire (1).

6. Télescope selon la revendication 5, dans lequel les deuxième (5) et troisième (6) miroirs de renvoi et le miroir tertiaire (3) ont des axes optiques respectifs (R₃, R₅, R₆) sensiblement parallèles au plan moyen du miroir primaire (1).

7. Télescope selon l'une quelconque des revendications précédentes, dans lequel le miroir primaire (1), les deuxième (5) et troisième (6) miroirs de renvoi et le miroir tertiaire (3) sont portés par une même structure de support commune.

8. Télescope selon la revendication 7, dans lequel la structure de support commune porte en outre le détecteur d'image.

9. Télescope selon l'une quelconque des revendications 1 à 8, dans lequel le premier miroir de renvoi (4) est décalé latéralement par rapport à l'axe optique (Z-Z) du miroir primaire (1) parallèlement à ladite première direction de propagation (D1), vers un côté dudit axe optique opposé au miroir tertiaire (3).

10. Télescope selon l'une quelconque des revendications 1 à 8, dans lequel le premier miroir de renvoi (4) est décalé latéralement par rapport à l'axe optique (Z-Z) du miroir primaire (1) parallèlement à ladite première direction de propagation (D1), vers un même côté dudit axe optique que le miroir tertiaire (3).

11. Télescope selon la revendication 10, comprenant au moins deux voies d'imagerie distinctes,
les miroirs primaire (1) et secondaire (2) étant communs aux deux voies d'imagerie,
le premier miroir de renvoi (4₁), le miroir tertiaire (3₁), les deuxième (5₁) et troisième (6₁) miroirs de renvoi et le détecteur d'image (10₁) formant une première des dites voies d'imagerie avec les miroirs primaire et secondaire,
un autre premier miroir de renvoi (4₂), un autre miroir tertiaire (3₂), des autres deuxième (5₂) et troisième (6₂) miroirs de renvoi et un autre détecteur d'image (10₂) formant une seconde des dites voies d'imagerie avec les miroirs primaire et secondaire,
le télescope étant conforme aux caractéristiques de la revendication 10 pour chacune des deux voies d'imagerie,
et le détecteur (10₁) de la première voie d'imagerie et ledit autre détecteur (10₂) de la seconde voie d'imagerie étant situés d'un même côté d'un premier plan méridien (P1) du miroir primaire (1).

12. Télescope selon la revendication 11, dans lequel le premier miroir de renvoi (4₁), le miroir tertiaire (3₁), les deuxième (5₁) et troisième (6₁) miroirs de renvoi et le détecteur (10₁) de la première voie d'imagerie d'une part, et ledit autre premier miroir de renvoi (4₂), ledit autre miroir tertiaire (3₂), lesdits autres deuxième (5₂) et troisième (6₂) miroirs de renvoi et ledit autre détecteur (10₂) de la seconde voie d'imagerie d'autre part, sont situés respectivement sur des côtés opposés d'un second plan méridien (P2) du miroir primaire (1) perpendiculaire au dit premier plan méridien (P1).

13. Télescope selon la revendication 12, dans lequel le premier miroir de renvoi (4₁), le miroir tertiaire (3₁), les deuxième (5₁) et troisième (6₁) miroirs de renvoi et le détecteur (10₁) de la première voie d'imagerie d'une part, et ledit autre premier miroir de renvoi (4₂), ledit autre miroir tertiaire (3₂), lesdits autres deuxième (5₂) et troisième (6₂) miroirs de renvoi et ledit autre détecteur (10₂) de la seconde voie d'imagerie d'autre part, sont situés à des positions sensiblement symétriques deux à deux par rapport au second plan méridien (P2) du miroir primaire (1).

14. Télescope selon l'une quelconque des revendications 11 à 13, dans lequel ledit premier miroir de renvoi (4₁) de la première voie d'imagerie et ledit autre premier miroir de renvoi (4₂) de la seconde voie d'imagerie sont chacun décalés latéralement par rapport à l'axe optique (Z-Z) du miroir primaire (1) dans deux sens opposés.

## Patentansprüche

1. Korschteleskop aufweisend die folgenden Elemente, aufgezählt in der Reihenfolge wie sie einer Ausbreitungsrichtung von Strahlen entspricht, die ein Endbild eines um eine Visierrichtung des Teleskops angeordneten Szeneabschnitts erzeugen:
- einen primären Spiegel (1) mit einer zentralen Öffnung (O),
- einen sekundären Spiegel (2), der vor dem primären Spiegel angeordnet ist,
- einen tertiären Spiegel (3), der hinter dem primären Spiegel angeordnet ist, um durch die Öffnung des primären Spiegels Strahlen zu empfangen, die von dem primären Spiegel, dann von dem sekundären Spiegel reflektiert worden sind, und
- einen Bilddetektor (10), der in einer Erzeugungsebene des von dem primären, sekundären und tertiären Spiegel erzeugten Endbilds angeordnet ist,
wobei der primäre und sekundäre Spiegel ferner eingerichtet sind, zwischen dem sekundären Spiegel und dem tertiären Spiegel ein Zwischenbild des Szenenabschnitts zu erzeugen,
wobei das Teleskop **dadurch gekennzeichnet ist, dass** es ferner einen ersten, zweiten und dritten planen Umlenkspiegel aufweist, die hinter dem primären Spiegel angeordnet sind, wobei
- der erste Umlenkspiegel (4) auf einem Weg der Strahlen zwischen dem sekundären und tertiären Spiegel angeordnet ist und derart orientiert ist, dass die Strahlen unmittelbar nach Reflektion an dem ersten Umlenkspiegel ein Bündel bilden, das eine erste Ausbreitungsrichtung (D1) hat, das mit einer radialen Richtung des primären Spiegels einen Winkel (α₁) bildet, der kleiner als 20° ist, und
- der zweite (5) und dritte (6) Umlenkspiegel längs der Strahlen zwischen dem tertiären Spiegel und dem Detektor angeordnet sind und jeweilige optische Achsen (R₅, R₆) haben, die mit einer Mittelebene des primären Spiegels jeweils einen Winkel (α₅, α₆) bilden, der kleiner als 20° ist.

2. Teleskop nach Anspruch 1, in welchem der zweite (5) und dritte (6) Umlenkspiegel derart orientiert sind, dass die Strahlen an dem Detektor (10) mit einer zweiten Ausbreitungsrichtung (D2) ankommen, die, in die Mittelebene des primären Spiegels projiziert, mit einer Projektion der ersten Ausbreitungsrichtung (D1) in die Mittelebene einen Winkel (α₁₂) bildet, der zwischen 45° und 135° ist.

3. Teleskop nach Anspruch 1 oder 2, in welchem der zweite Umlenkspiegel (5) derart orientiert ist, dass die Strahlen mit einem mittleren Einfallswinkel (β₅), der zwischen 10 und 50° beträgt, an dem zweiten Umlenkspiegel ankommen.

4. Teleskop nach einem der vorstehenden Ansprüche, in welchem der dritte Umlenkspiegel (6) derart orientiert ist, dass die Strahlen mit einem mittleren Einfallswinkel (β₆), der kleiner als 45° ist, an dem dritten Umlenkspiegel ankommen.

5. Teleskop nach einem der vorstehenden Ansprüche, in welchem der tertiäre Spiegel (3) eine optische Achse (R₃) hat, die in einem Winkel (α₃), der kleiner als 20° ist, bezüglich der Mittelebene des primären Spiegels (1) geneigt ist.

6. Teleskop nach Anspruch 5, in welchem der zweite (5) und dritte (6) Umlenkspiegel und der tertiäre Spiegel (3) jeweilige optische Achsen (R₃, R₅, R₆) haben, die im Wesentlichen parallel zu der Mittelebene des primären Spiegels (1) sind.

7. Teleskop nach einem der vorstehenden Ansprüche, in welchem der primäre Spiegel (1), der zweite (5) und dritte (6) Umlenkspiegel und der tertiäre Spiegel (3) von einer gleichen gemeinsamen Trägerstruktur getragen werden.

8. Teleskop nach Anspruch 7, in welchem die gemeinsame Trägerstruktur außerdem den Bilddetektor trägt.

9. Teleskop nach einem der Ansprüche 1 bis 8, in welchem der erste Umlenkspiegel (4) lateral versetzt bezüglich der optischen Achse (Z-Z) des primären Spiegels (1) angeordnet ist und zwar parallel zu der ersten Ausbreitungsrichtung (D1) hin zu einer dem tertiären Spiegel (3) entgegengesetzten Seite der optischen Achse.

10. Teleskop nach einem der Ansprüche 1 bis 8, in welchem der erste Umlenkspiegel (4) lateral versetzt bezüglich der optischen Achse (Z-Z) des primären Spiegels (1) angeordnet ist und zwar parallel zu der ersten Ausbreitungsrichtung (D1) hin zu einer gleichen Seite der optischen Achse wie der tertiäre Spiegel (3).

11. Teleskop nach Anspruch 10, aufweisend mindestens zwei separate Abbildungswege, wobei
der primäre (1) und sekundäre (2) Spiegel den zwei Abbildungswegen gemeinsam sind, der erste Umlenkspiegel (4₁), der tertiäre Spiegel (3₁), der zweite (5₁) und dritte (6₁) Umlenkspiegel und der Bilddetektor (10₁) einen ersten der Abbildungswege mit dem primären und sekundären Spiegel bilden,
ein anderer erster Umlenkspiegel (4₂), ein anderer tertiärer Spiegel (3₂), andere zweite (5₂) und dritte (6₂) Umlenkspiegel und ein anderer Bilddetektor (10₂) einen zweiten der Abbildungswege mit dem primären und sekundären Spiegel bilden,
das Teleskop für jeden der zwei Abbildungswege den Merkmalen des Anspruchs 10 entspricht,
und der Detektor (10₁) des ersten Abbildungswegs und der andere Detektor (10₂) des zweiten Abbildungswegs auf einer gleichen Seite einer ersten Meridianebene (P1) des primären Spiegels (1) angeordnet sind.

12. Teleskop nach Anspruch 11, in welchem der erste Umlenkspiegel (4₁), der tertiäre Spiegel (3₁), der zweite (5₁) und dritte (6₁) Umlenkspiegel und der Detektor (10₁) des ersten Abbildungswegs einerseits und der andere erste Umlenkspiegel (4₂), der andere tertiäre Spiegel (3₂), der andere zweite (5₂) und dritte (6₂) Umlenkspiegel und der andere Detektor (10₂) des zweiten Abbildungswegs andererseits jeweils an entgegengesetzten Seiten einer zu der ersten Meridianebene (P1) senkrechten zweiten Meridianebene (P2) des primären Spiegels (1) angeordnet sind.

13. Teleskop nach Anspruch 12, in welchem der erste Umlenkspiegel (4₁), der tertiäre Spiegel (3₁), der zweite (5₁) und dritte (6₁) Umlenkspiegel und der Detektor (10₁) des ersten Abbildungswegs einerseits und der andere erste Umlenkspiegel (4₂), der andere tertiäre Spiegel (3₂), der andere zweite (5₂) und dritte (6₂) Umlenkspiegel und der andere Detektor (10₂) des zweiten Abbildungswegs andererseits an Positionen angeordnet sind, die im Wesentlichen paarweise symmetrisch bezüglich der zweiten Meridianebene (P2) des primären Spiegels (1) sind.

14. Teleskop nach einem der Ansprüche 11 bis 13, in welchem der erste Umlenkspiegel (4₁) des ersten Abbildungswegs und der andere erste Umlenkspiegel (4₂) des zweiten Abbildungswegs jeweils in zwei entgegengesetzte Richtungen lateral versetzt bezüglich der optischen Achse (Z-Z) des primären Spiegels (1) angeordnet sind.

## Claims

1. Korsch-type telescope comprising the following elements, listed in order according to a direction of propagation of rays forming a final image of a portion of a scene situated around a viewing direction of the telescope:
- a primary mirror (1) having a central aperture (O),
- a secondary mirror (2) disposed in front of the primary mirror,
- a tertiary mirror (3), disposed behind the primary mirror for receiving, through the aperture of the primary mirror, rays reflected by said primary mirror, then by the secondary mirror, and
- an image detector (10), disposed in a formation plane of the final image as formed by the primary, secondary and tertiary mirrors,
the primary and secondary mirrors furthermore being arranged so as to form, between said secondary mirror and said tertiary mirror, an intermediate image of the portion of the scene,
the telescope being **characterised in that** it further comprises first, second and third flat folding mirrors situated behind the primary mirror,
- said first folding mirror (4) being situated on a path of the rays between the secondary and tertiary mirrors, and oriented so that the rays form, immediately after reflection on said first folding mirror, a beam with a first direction of propagation (D1) making an angle (α₁) of less than 20° with a radial direction of the primary mirror, and
- said second (5) and third (6) folding mirrors being situated along the rays between the tertiary mirror and the detector, and having respective optical axes (R₅, R₆) each forming an angle (α₅, α₆) of less than 20° with a mean plane of the primary mirror.

2. Telescope according to claim 1, wherein the second (5) and third (6) folding mirrors are oriented so that the rays arrive on the detector (10) with a second direction of propagation (D2) which forms, in projection in the mean plane of the primary mirror, an angle (α₁₂) that lies in the range 45° to 135°, with a projection of said first direction of propagation (D1) in said mean plane.

3. Telescope according to claim 1 or 2, wherein the second folding mirror (5) is oriented so that the rays arrive on said second folding mirror with a mean angle of incidence (β₅) that lies in the range 10 to 50°.

4. Telescope according to any one of the preceding claims, wherein the third folding mirror (6) is oriented so that the rays arrive on said third folding mirror with a mean angle of incidence (β₆) of less than 45°.

5. Telescope according to any one of the preceding claims, wherein the tertiary mirror (3) has an optical axis (R₃) that is inclined by an angle (α₃) of less than 20° relative to the mean plane of the primary mirror (1).

6. Telescope according to claim 5, wherein the second (5) and third (6) folding mirrors and the tertiary mirror (3) have respective optical axes (R₃, R₅, R₆) that are substantially parallel to the mean plane of the primary mirror (1).

7. Telescope according to any one of the preceding claims, wherein the primary mirror (1), the second (5) and third (6) folding mirrors and the tertiary mirror (3) are supported by one same common support structure.

8. Telescope according to claim 7, wherein the support structure further supports the image detector.

9. Telescope according to any one of claims 1 to 8, wherein the first folding mirror (4) is laterally offset relative to the optical axis (Z-Z) of the primary mirror (1) parallel to said first direction of propagation (D1), towards a side of said optical axis that is opposite the tertiary mirror (3).

10. Telescope according to any one of claims 1 to 8, wherein the first folding mirror (4) is laterally offset relative to the optical axis (Z-Z) of the primary mirror (1) parallel to said first direction of propagation (D1), towards a same side of said optical axis as the tertiary mirror (3).

11. Telescope according to claim 10, comprising at least two separate imaging paths, the primary (1) and secondary (2) mirrors being common to the two imaging paths, the first folding mirror (4₁), the tertiary mirror (3₁), the second (5₁) and third (6₁) folding mirrors and the image detector (10₁) forming a first of said imaging paths with the primary and secondary mirrors,
another first folding mirror (4₂), another tertiary mirror (3₂), other second (5₂) and third (6₂) folding mirrors and another image detector (10₂) forming a second of said imaging paths with the primary and secondary mirrors,
the telescope being in accordance with the features of claim 10 for each of the two imaging paths,
and the detector (10₁) of the first imaging path and said other detector (10₂) of the second imaging path being situated on one same side of a first meridian plane (P1) of the primary mirror (1).

12. Telescope according to claim 11, wherein the first folding mirror (4₁), the tertiary mirror (3₁), the second (5₁) and third (6₁) folding mirrors and the detector (10₁) of the first imaging path on the one hand, and said other first folding mirror (4₂), said other tertiary mirror (3₂), said other second (5₂) and third (6₂) folding mirrors and said other detector (10₂) of the second imaging path on the other hand, are respectively situated on opposite sides of a second meridian plane (P2) of the primary mirror (1) perpendicular to said first meridian plane (P1).

13. Telescope according to claim 12, wherein the first folding mirror (4₁), the tertiary mirror (3₁), the second (5₁) and third (6₁) folding mirrors and the detector (10₁) of the first imaging path on the one hand, and said other first folding mirror (4₂), said other tertiary mirror (3₂), said other second (5₂) and third (6₂) folding mirrors and said other detector (10₂) of the second imaging path on the other hand, are situated in substantially symmetrical positions pairwise relative to the second meridian plane (P2) of the primary mirror (1).

14. Telescope according to any one of claims 11 to 13, wherein said first folding mirror (4₁) of the first imaging path and said other first folding mirror (4₂) of the second imaging path are each laterally offset relative to the optical axis (Z-Z) of the primary mirror (1) on two opposite directions.
